# EUROPÄISCHE PATENTSCHRIFT

(11) **EP 0 797 363 B1**
(45) Veröffentlichungstag und Bekanntmachung des Hinweises auf die Patenterteilung: **14.12.2005**
(21) Anmeldenummer: 97104625.5
(22) Anmeldetag: 18.03.1997
(51) Int. Cl.: H04Q 3/545

(54) **Verfahren zur Änderung von betriebstechnischen Daten, die in einem privaten Kommunikationssystem abgespeichert sind**
Method for changing the operational data which are stored in a private communication system
Procédé de changement de données d'opération étant mémorisées dans un système de communication privé

(30) Priorität: 20.03.1996 DE 19611023
(43) Veröffentlichungstag der Anmeldung: 24.09.1997
(73) Patentinhaber: SIEMENS AKTIENGESELLSCHAFT, 80333 München (DE)
(72) Erfinder: Böttger, Detlev, 58239 Schwerte (DE); Roth, Roland, 45884 Gelsenkirchen (DE); Lindemann, Werner, Dr., 45473 Mülheim a.d. Ruhr (DE)

(56) Entgegenhaltungen:
- EP-A- 0 684 725
- WO-A-94/23523
- PATENT ABSTRACTS OF JAPAN vol. 014, no. 032 (E-876), 22. Januar 1990 (1990-01-22) & JP 01 265756 A (NEC CORP), 23. Oktober 1989 (1989-10-23)

## Beschreibung

Die Erfindung betrifft ein Verfahren zur Änderung von in einem speicherprogrammierten privaten Kommunikationssystem abgespeicherten betriebstechnischen Daten, die bedieneroberflächen-gesteuert einggebbar sind, wobei das Kommunikationssystem einen Systemspeicher zur Speicherung von Programmodulen und von Daten und wenigstens einen Systemprozessor mit einem Betriebssystem zur Bearbeitung der Programmodule aufweist und die Änderung der betriebstechnischen Daten vermittels der Eingaben an einem an das System angeschlossenen und mit einem Display versehenen Fernsprechendgerät vorgenommen wird.

Die Programmierung der Daten des Kundendatenspeichers eines solchen Kommunikationssystems ist beispielsweise vermittels eines berechtigten Systemfernsprechers mit Hilfe von speziellen Prozeduren möglich. Diese Festlegung z. B. der Kundendaten, die die Funktionalität des Systems bestimmen, kann auch mit Hilfe einer Datenverarbeitungsanlage, die beispielsweise durch einen Personalcomputer realisiert ist, erfolgen. Diese ist dann zum Beispiel über eine serielle Schnittstelle an das Kommunikationssystem angeschlossen und es ist dabei die Installierung eines speziellen Verwaltungsprogramms vorausgesetzt. Es ist auch bekannt eine Fernverwaltung für ein Kommunikationssystem zu ermöglichen. Hierzu ist auf der programmierenden Seite eine Datenverarbeitungsanlage, die durch einen Personalcomputer mit entsprechendem Verwaltungsprogramm realisiert ist, erforderlich. Die betriebstechnischen Aufträge werden dabei über eine Modem-Schnittstelle in das Leitungsnetz eingespeist, über das eine Verbindung zu dem betreffenden Kommunikationssystem herstellbar ist.

Beispielsweise ist aus der europäischen Offenlegungsschrift EP 0 684 725 A2 ein derartiger Service-Personalcomputer bekannt, der lokal oder über Kommunikationsnetze mit Kommunikationssystemen verbindbar ist. Eine Anpassungsfähigkeit an unterschiedliche Kommunikationssysteme wird dabei mit Hilfe einer Softwarekonzeption erreicht, bei der Anweisungen kommunikationssystemindividuell und bedieneroberflächengesteuert generiert und an das jeweilige Kommunikationssystem übermittelt werden.

Des Weiteren ist aus PATENT ABSTRACTS OF JAPAN vol. 014, no. 032 (E-876), 22.Januar 1990 & JP 01 265756 A bekannt eine Fernverwaltung für ein Kommunikationssystem ausgehend von einem weiteren Kommunikationssystem zu realisieren. Hierbei werden an einem Verwaltungsterminal des weiteren Kommunikationssystems eingegebene Verwaltungsbefehle ausgehend vom weiteren Kommunikationssystem an das zu verwaltende Kommunikationssystem übermittelt.

Üblicherweise steht zur Verwaltung des Kundendatenspeichers eines Kommunikationssystems ein die sogenannte Benutzungsoberfläche repräsentierendes Programmodul zur Verfügung, das die zum Beispiel über ein berechtigtes Systemfernsprechendgerät vorgenommenen Eingaben interpretiert bzw. über das Display dieses Fernsprechendgerätes visuell erfaßbare Quittungen signalisiert. In einem modern konzipierten Kommunikationssystem sind im Rahmen der Bedienungsoberfläche Prozeduren implementiert, die bei ihrer Aktivierung Menüs, Texte und Führungsquittungen zur Verfügung stellen, um Einträge in die Datenbank des Systems beispielsweise in den Kundendatenspeicher zu ermöglichen. Diese durch das Servicepersonal, zum Beispiel von einem berechtigten Fernsprechendgerät aus vorgenommenen Eingaben werden unmittelbar durch die entsprechenden Programmkomponenten innerhalb des jeweiligen Kommunikationssytems verarbeitet.

Es ist die Aufgabe der Erfindung eine einfache Möglichkeit für eine Fernverwaltung eines Kommunikationssytems zu schaffen.

Diese Aufgabe wird ausgehend von den im Oberbegriff des Patenanspruches 1 angegebenen Merkmalen durch dessen kennzeichnenden Merkmale gelöst.

Der wesentliche Aspekt der Erfindung liegt darin, daß diese Fernverwaltung bzw. Fernprogrammierung nach der Aktivierung einer bestimmten Prozedur von einem Fernsprechendgerät eines ersten Kommunikationssytems (Ursprungskommunikationssystem) unmittelbar für ein zweites Zielkommunikationssystem erfolgen kann. Dies geschieht unmittelbar unter Zuhilfenahme derjenigen Prozeduren, die im ersten Ursprungskommunikationssystem auch für die Programmierung der eigenen Kundendaten verwendet werden. Diese Fernverwaltung kann also ohne Einsatz eines Personalcomputers bei Nutzung derjenigen Synergien vorgenommen werden, die in der Bedienungsoberfläche des betreffenden Systems enthalten sind. In vorteilhafter Weise erfolgen die diesbezüglichen Eingaben am Fernsprechendgerät, das am Ursprungskommunikationssystem angeschlossen ist genauso, als würde die Programmierung vermittels der Systemverwaltungsprozedur unmittelbar am Zielsystem selbst vorgenommen werden. Die für eine solche Fernprogrammierung notwendigen Prozeduren werden im Ursprungskommunikationssystem durch einen speziellen Einstieg eröffnet. Aufgrund dieses Einstieges werden erfindungsgemäß die jeweiligen vollständigen Verwaltungsaufträge nicht innerhalb des Systems selbst verarbeitet, sondern sie werden über eine entsprechend ausgebildete Schnittstelle vermittels der Peripherie-Steuerung über eine externe Verbindungsleitung an das Zielkommunikationssystem weitergeleitet. Die Softwaremeldungen, die normalerweise innerhalb des Kommunikationssystems zwischen dem die Bedienungsoberfläche repräsentierenden Programmodul und einem Programmodul, das für die Einspeicherung der geänderten Daten in die Datenbank des Systems zuständig ist, ausgetauscht werden, werden also in dem bestehenden Sonderbetriebsmodus in Informationen umgesetzt, die an die spezielle Verbindung zwischen dem Ursprungskommunikationssystem und dem zu programmierenden Zielkommunikationssystem abgestimmt ist.

Dient dieser Informationsübertragung eine ISDN-orientierte Leitungsschnittstelle, so werden die jeweils vollständigen Auftragsdateninformationen der einzelnen Aufträge als D-Kanalprotokoll übermittelt. Die Auftragsdateninformationen, die also in der notwendigen Umsetzung im Zielkommunikationssystem unmittelbar dem dort vorhandenen Programmodul, das für die Einspeicherung dieser Daten in den Kundendatenspeicher zuständig ist, zugeführt werden, können auch als Mehrfrequenzcode-Zeichen übertragen werden. Bei einer digitalen Leitung besteht die Möglichkeit, solche Auftragsinformationen aus Mehrfrequenzcode-Zeichen, beispielsweise auch in einem Sprachkanal, zu dem Zielkommunikationssystem zu übertragen.

Gemäß einer Weiterbildung der Erfindung sind als Auftragsinformationen gezielte endgerätebezogene Lese- bzw. Schreibaufträge oder Aufträge zur Darstellung von beipsielsweise endgerätebezogenen aufeinanderfolgenden Speicherinhalten im Sinne von "Weiterblättern" generierbar. Die entsprechenden Quittungsinformationen, also eine Information darüber, ob dieser jeweilige Auftrag ausgeführt wurde oder eine entsprechende Fehlermeldung wird zur Darstellung am Display des aktuell beteiligten Endgerätes zum Ursprungskommunikationssystem zurückübertragen. Mit der Möglichkeit des "Blätterns" wird sichergestellt, daß sich die Ausbauvarianten der beiden Kommunikationssysteme oder auch die Nummerierungspläne voneinander unterscheiden können.

Gemäß einer Weiterbildung der Erfindung werden zur Bildung der Auftragsinformationen die hierzu notwendigen Entscheidungsinformationen von dem die Bedienungsoberfläche repräsentierenden Programmodul des Ursprungskommunikationssystems erzeugt. Im Hinblick auf dieses Programmodul wird die betreffende Bedienungsoberfläche dieses Ursprungskommunikationssystem mit darin gebildeten Displaytexten unterstützt, wobei dies durch Prozedursteuerinformationen oder durch vom Zielkommunikationssystem empfangene Quittungsinformationen erfolgt.

Die notwendigen Displaytexte entstehen also immer aus der Prozedurführung des Ursprungskommunikationssystems. Diese Prozedurführung wird entweder unmittelbar aus den im System enthaltenen Informationen oder durch die empfangenen Quittungsinformationen gesteuert. Grundsätzlich wird die Prozedur der Fernprogrammierung im Ursprungskommunikationssystem geführt und in bestimmten Situationen werden Auftragsinformationen für das Zielkommunikationssystem gebildet und Quittungen empfangen. Anhand dieser Quittungen kann dann die Prozedur entsprechend weitergeführt werden.

Weitere vorteilhafte Ausgestaltungen der Erfindungen sind den restlichen Unteransprüchen zu entnehmen.

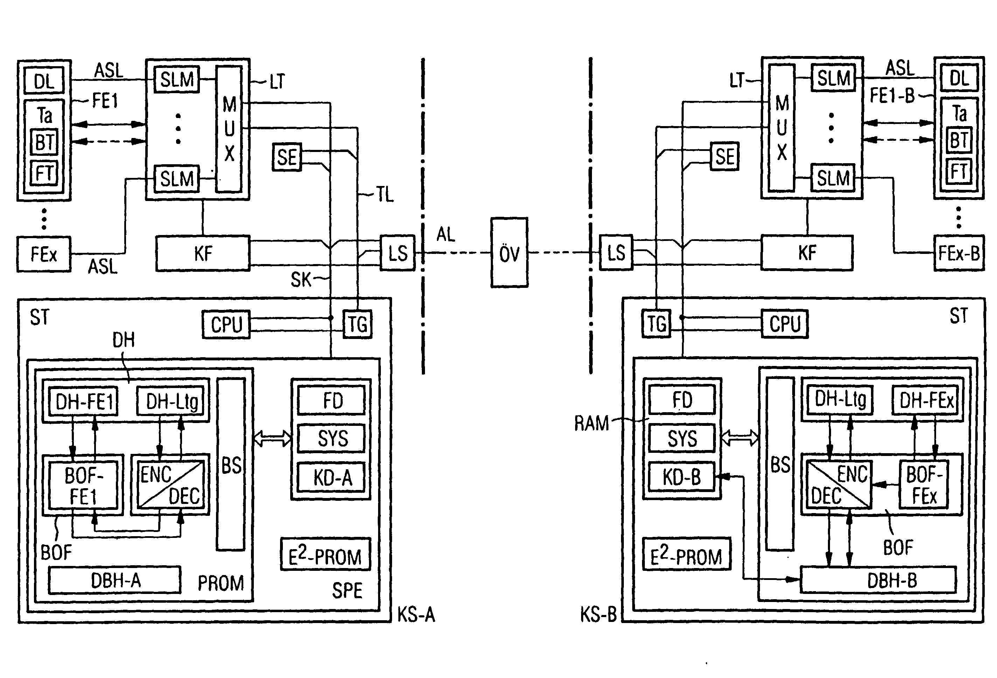

Die Erfindung wird im folgenden anhand eines figürlich dargestellten Ausführungsbeispiels erläutert. Die beiden Kommunikationssysteme, also das Ursprungskommunikationssystem KS-A und das Zielkommunikationssystem KS-B sind im wesentlichen gleichartig aufgebaut. In der Figur ist jeweils die Struktur eines jeden Kommunikationssystems schematisch dargestellt. Es sind lediglich die zum Verständnis der Erfindung notwendigen Komponenten gezeigt, die nicht unmittelbar im Zusammenhang mit der Möglichkeit der Fernprogrammierung herangezogenen Komponenten sind in beiden Systemen mit dem gleichen Bezugszeichen versehen. Die übrigen Komponenten sind durch das zusätzliche Bezugszeichen A bzw. B innerhalb der beiden Systeme unterschieden.

Zentraler Bestandteil eines jeden Kommunikationssystems KS-A bzw. KS-B, die jeweils ein Nebenstellenkommunikationssystem darstellen, ist ein zentrales Koppelfeld KF, über das Endgeräte, von denen die Fernsprechendgeräte FE1 bis FEx schematisch angedeutet sind, miteinander bzw. mit zu einem öffentlichen Kommunikationssystem ÖV führenden Leitung AL verbindbar sind. Das zentrale Koppelfeld KF steht unter dem Steuereinfluß einer zentralen Systemsteuerung ST, die neben dem Zentralprozessor CPU eine Speichereinrichtung SPE und eine Takteinheit TG enthält. Der Zentralprozessor steuert sämtliche Vermittlungsvorgänge und besorgt eine Aufbereitung und Zuteilung der Steuerdaten. Diese Aufgaben können auch auf mehrere Prozessoren aufgeteilt werden. In jedem Kommunikationssystem sind Leitungsanschluß-Einrichtungen, symbolisiert durch die Leitungsanschluß-Einrichtung LT angeordnet. Diese enthalten jeweils Teilnehmeranschlußmodule SLM. Diese Teilnehmeranschlußmodule sind über Teilnehmeranschlußleitungen ASL jeweils mit einem der Kommunikationsendgeräte FE1 bis FEx verbunden, wobei grundsätzlich unterschiedliche Teilnehmeranschlußmodule vorgesehen sein können. Diese sind zum einen Teilnehmeranschlußmodule für den Anschluß analoger Kommunikationsendgeräte und zum anderen Teilnehmeranschlußmodule für den Anschluß unterschiedlicher strukturierter digitaler Kommunikationsendgeräte. Ein solches digitales Teilnehmeranschlußmodul ist für den Anschluß einer ganz bestimmten Anzahl von digitalen Kommunikationsendgeräten vorgesehen. Die Nachrichtenübermittlung erfolgt hierbei zum Beispiel über Nachrichtenkanäle N und die Signalisierung wird über einen zusätzlichen Kanal S übermittelt. Die von einem Kommunikationsendgerät übermittelten digitalen Sprachinformationen werden ebenfalls über eine Multiplex-Einrichtung MUX zum Koppelfeld KF weitergegeben. Vermittlungstechnisch gesteuert werden die Leitungsanschluß-Einrichtungen LT von der Systemsteuerung ST. Hierbei ist jede Leitungsanschluß-Einrichtung über einen Signalisierungskanal SK mit der Systemsteuerung verbunden. Über diesen Signalisierungskanal SK werden die Informationen, zum Beispiel mit Hilfe der bekannten HDLC-Übermittlungsprozedur ausgetauscht. Die in der Systemsteuerung gebildeten Taktsignale werden über eine Taktleitung TL an die Leitungsanschluß-Einrichtungen LT verteilt. Diese Taktsignale werden durch eine mit dem Bezugszeichen TG symbolisierte Einheit geliefert. Die Peripherie des Kommunikationssystems wird jeweils ergänzt durch eine Signalisierungseinheit SE, die zur Zeichenversorgung des Systems vorhanden ist. Der zentrale Prozessor CPU der Systemsteuerung ST hat Zugriff zu den in der Speichereinrichtung SPE abgelegten Daten. Sie besteht grundsätzlich aus den Speicherteilen PROM und RAM. In dem Programmspeicherteil PROM ist das Systembetriebsprogramm und die zu ihm bezüglich der Peripherie-Technik, der Betriebstechnik, der Sicherheitstechnik und der Vermittlungstechnik gehörenden Programme abgespeichert. Durch die Programmkomponente BOF wird die sogenannte Benutzungsoberfläche gesteuert. Dieses Programmodul beinhaltet unterschiedliche Prozeduren.

In dem Speicherteil RAM ist als Teileinheit der Datenbasis der Speicherbereich KD angedeutet. Dieser Speicherbereich wird in einem permanenten Speicher (E²PROM) gesichert, um Datenverlust bei Netzausfall zu vermeiden. In diesem sind die Kundendaten, wie zum Beispiel die den einzelnen Endgeräten FE zugeteilten Berechtigungen und die Systemkonfiguration abgelegt. In dem Teilbereich SYS sollen die systembezogenen Daten enthalten sein. Der Speicherteil RAM dient unter anderem der Aufnahme von temporären Daten zur Programmablaufsteuerung. Es werden in ihm auch Daten übernommen, die während eines durch ein Kommunikationsendgerät initiierten Verbindungsaufbaus oder bei der Inanspruchnahme eines Dienstes bzw. eines Leistungsmerkmals abgefragt werden. In dem Speicherbereich FD ist jedem Endgerät ein Speicherabschnitt zugeteilt, in dem sämtliche endgerätebezogenen Daten abgelegt sind. Es sind darin auch Kennungen für das durch die jeweilige Benutzereingabe oder für das durch die vermittlungstechnischen Abläufe jeweils angeforderte Menü enthalten. Eine derartige Menüleiste wird dann auf der Anzeigeeinrichtung, die zum Beispiel in Form eines alphanumerischen Displays DL realisiert ist, angeboten. Das jeweils darzustellende Menü beinhaltet einen Satz von Optionen, wobei diese einzelnen Optionen durch die Komponente "Benutzungsoberfläche" BOF für die Darstellung auf dem Display aufbereitet werden. Der Benutzer hat die Möglichkeit im Tastenfeld Ta eine angezeigte Option, zum Beispiel durch die Betätigung einer Bestätigungstaste BT zu aktivieren. Durch die Betätigung einer Folgetaste FT besteht die Möglichkeit, sich die nächste Option anzeigen zu lassen.

Es besteht nun erfindungsgemäß die Möglichkeit die Verwaltung der im Speicherteil RAM bzw. E²-PROM des Zielkommunikationssystems KS-B enthaltenen Daten im Sinne einer Fernprogrammierung dieses Systems von einem Fernsprechgerät des Ursprungskommunikationssystems KS-A zu ändern. Anstelle eines Personalcomputers ist also auf der programmierenden Seite ein bereits vorhandenes Kommunikationssystem an die entsprechende weiterführende Leitung AL geschaltet. Zur Veränderung der z. B. im Kundendatenspeicher KD des Zielsystems enthaltenen Daten wird zunächst mit Hilfe eines Fernsprechendgerätes oder eines speziell berechtigten Fernsprechendgerätes eine Verbindung zwischen dem Ursprungskommunikationssystem und dem Zielkommunikationssystem KS-B kommend oder gehend aufgebaut. Der betreffende Benutzer z. B. Fex dieses Zielkommunikationssystems der den Ruf entgegengenommen hat, leitet unter Eingabe eines Zugangscodes eine Aktivierungsprozedur bzw. Freigabeprozedur ein, wodurch zum Beispiel der passive Fernbetriebsmodus eröffnet wird. Hierzu wird die Komponente BOF-FEx benötigt, durch die auch die Anschaltung der Code-Empfänger an die Leitung AL veranlaßt wird. Der Zugangscode wird zum Schutz der Kundendaten benötigt. Außerdem kann diese Aktivierungsprozedur durch einen entsprechenden Eintrag im Kundendatenspeicher grundsätzlich verriegelt werden. Die Aktivierungsprozedur kann von berechtigten Endgeräten aus durchgeführt werden. Nach der Aktivierungsprozedur kann der Teilnehmer z. B. FEx-B des Zielkommunikationssystems -das auch als Slave-System bezeichnet werden könnte- auflegen. Es wird jedoch die Verbindung zwischen den beiden Systemen aufrechterhalten. Zur Überwachung dieser Verbindung wird vom Ursprungssystem, das auch als Master-System bezeichnet werden könnte, eine zyklische (z.B. alle 60 sec) Signalisierung via DTMF-Zeichen ausgesendet. Bei Ausbleiben dieser Signalisierung wird die Leitung vom Ziel-Kommunikationssystem ausgelöst. Im Ausführungsbeispiel wird davon ausgegangen, daß die Leitung AL, die zum Beispiel unter Einbeziehung eines öffentlichen Vermittlungssystems ÖV die beiden Kommunikationssysteme verbindet, eine sogenannte analoge Leitung darstellt. Aufgrund der im Zielkommunikationssystem KS-B eröffneten Aktivierungsprozedur wird ein Code-Empfänger, der beispielsweise dem Leitungssatz LS zugeordnet ist, an die betreffende Leitung angeschaltet. Dieses erfolgt in der peripherienahen Komponente DH-Ltg.

Im programmierenden Ursprungskommunikationssystem KS-A wird durch eine bestimmte Eingabe des Benutzers vor oder anschließend an die Aktivierungsprozedur des beteiligten Teilnehmers des Zielkommunikationssystems ein Sonderbetriebsmodus eingestellt, so daß damit der aktive Fernbetriebsmodus eröffnet ist. Diese Eröffnung ist nur aufgrund eines entsprechenden Passwortes ggf. und/oder nur von einem besonders berechtigten Systemfernsprecher aus möglich.

Bei einem speicherprogrammierbaren System sind zum Beispiel in speziellen Bereichen des Kundendatenspeichers KD Informationen abgelegt, die wesentlich die Funktionalität des Systems bestimmen. Diese Daten können im System entsprechend programmiert bzw. verwaltet werden. Hierzu steht zum Beispiel im Kommunikationssystem KS-A eine die Bedienungsoberfläche repräsentierende Programmkomponente BOF zur Verfügung, die entsprechenden Eingaben, die von einer berechtigten Person (Service-Personal) an einem bestimmten Fernsprechendgerät (FE1) vorgenommen werden, interpretiert. Durch diese Programmkomponente wird auch die Darstellung von Quittungen am Display dieses Fernsprechendgerätes veranlaßt. Normalerweise werden nun die Verwaltungsaufträge von der Programmkomponente BOF an die Programmkomponente DBH übergeben, die die Abläufe für die Einspeicherung von Daten in den Kundendatenspeicher KD-A dieses Systems KS-A regelt. Es können zum Beispiel folgende Auftragstypen zwischen der Programmkomponente BOF A und der Programmkomponente DBH abgearbeitet werden:

Leseaufträge, um beispielsweise den Endgerätetyp für einen bestimmten Teilnehmer festzustellen. Als Quittung wird entweder der gelesene Inhalt der Daten oder eine Fehlermeldung -zum Beispiel daß dieser betreffende Anschluß nicht geschaltet ist- zur Darstellung auf den Display zurückgegeben. Bei Schreibaufträgen, zum Beispiel zur Änderung des Endgerätetyps für einen bestimmten Teilnehmer erfolgt entweder die Quittung, daß dieser Schreibauftrag ausgeführt wurde oder es wird eine entsprechende Fehlermeldung gegeben. Diese positive oder negative Quittung, wobei letztere zum Beispiel bei Daten Inkonsistenzen erfolgt, wird wiederum auf dem Display dargestellt. Es kann auch der Auftragstyp "Weiterblättern" formuliert werden, mit dem z.B. die Daten für den nächsten Teilnehmer angezeigt werden können. Als Quittung von der Programmkomponente DBH-A an die Programmkomponente BOF wird dann der gelesene Inhalt der Daten zur Darstellung auf dem Display übergeben.

Ist das Kommunikationssystem in den bereits erwähnten Sonderbetriebsmodus geschaltet, in dem die Fernprogrammierung eines anderen Kommunikationssystems, zum Beispiel des Zielkommunikationssystems KS-B erfolgen soll, so findet nicht mehr die Verarbeitung der Auftragsinformationen und die Erstellung der Quittungen innerhalb des betreffenden Systems statt, sondern es erfolgt ein Austausch mit dem Zielkommunikationssystem KS-B. In dem eingestellten Sonderbetriebsmodus ist also im Ursprungskommunikationssystem der Zugriff der Benutzungsoberfläche auf die Datenbank bzw. den Kundendatenspeicher unterbunden. Statt dessen werden die eingegeben Aufträge an einen Programmbaustein ENC-A übergeben. Dieser setzt die Aufträge in eine Mehrfrequenzccodierung um und es wird die entsprechende Mehr-Frequenzfolge vermittels der entsprechenden Peripherie-Steuerung auf der externen Leitung AL an das Zielkommunikationssystem KS-B übertragen. Es werden also jeweils die aufgrund der Eingaben an einem Fernsprechendgerät als Software-Meldungen generierten Aufträge in Mehrfrequenzccode-Zeichen umgesetzt (DTMF-Zeichenfolge) und auf der analogen externen Leitung AL ausgesendet. Im Zielkommunikationssystem KS-B, das wie bereits beschrieben, in einem passiven Fernbetriebsmodus durch die vorgenommene Freigabeprozedur geschaltet wurde, werden die empfangenen Mehrfrequenzcode-Zeichen von der Steuerung unmittelbar dem Programmbaustein DEC-B zugeleitet. Dieser nimmt eine Decodierung der empfangenen Mehrfrequenzcode-Zeichen vor und leitet die diesen Zeichen entsprechenden Softwaremeldungen als entsprechende Aufträge an die Programmkomponente DBH-B weiter. Vermittels dieser Programmkomponente wird dann das Auslesen bzw. die Änderung der zum Beispiel im Kundendatenspeicher KD-B enthaltenen Daten, veranlaßt. Die abhängig vom jeweiligen Vorgang generierten Quittungen werden in umgekehrter Richtung über den Programmbaustein ENC-B, der die entsprechenden Softwaremeldungen in Mehrfrequenzcode-Zeichen umsetzt und zu dem Ursprungszielkommunikationssystem KS-A zurückübertragen. Dort werden diese Zeichen in dem Programmbaustein DEC-A decodiert und an die Programmkomponente BOF-A übergeben. Es werden also dem programmierenden Ursprungskommunikationssystem in Form der Mehrfrequenzcode-Zeichen gelesene Daten und Daten für die Bestätigung von Aufträgen bzw. Daten, die in den einzelnen Aufträgen angefordert wurden, zurückgesendet. Vermittels der Programmkomponente BOF-A wird auf dem Display desjenigen Fernsprechers, von dem aus die Programmierung vorgenommen wird, eine entsprechende Anzeige vorgenommen. Die Fernverwaltung bzw. Fernprogrammierung wird also mit der Bedienungsoberfläche der normalen Systemverwaltung des Ursprungskommunikationssystems KS-A durchgeführt. Die Eingaben erfolgen also genauso, als würde die Programmierung per Systemverwaltungsprozedur direkt am Zielkommunikationssystem vorgenommen werden. So erfolgt beispielsweise die Anwahl der einzelnen Teilnehmer mit dem systemspezifischen Rufnummernplan.

Die Bedienungsoberfläche wird bei dieser Fernprogrammierung im Ursprungssystem KS-A geführt. Entsprechend werden dann auf dem Display des Fernsprechendgerätes Menüs angezeigt. Wird ein Auftrag formuliert, so werden wenn die notwendigen Entscheidungsgrundlagen, nicht vorhanden sind, diese aus dem Zielkommunikationssystem KS-B abgeholt. Erst mit der auf einen Auftrag hin übermittelten Quittung , wird der Display-Text dann im Ursprungskommunikationssystem angezeigt. Diese Quittungen werden also zur weiteren Steuerung der Benutzungsoberfläche verwendet.

Bei der Durchführung der Fernprogrammierung wird eine Überwachung des Protokolls vorgenommen. Die Fernverwaltung wird beim Ursprungskommunikationssystem durch Auslösen der bestehenden Verbindung oder durch Verlassen des Fernbetriebsmodus beendet. Beim Zielkommunikationssystem wird der erwähnte passive Fernbetriebsmodus durch Empfang eines Auslösekriteriums auf der Leitung oder durch das Ausbleiben der zyklischen Signalisierung oder durch den Empfang eines speziellen Endekriteriums automatisch beendet. Im Zusammenhang mit der vorzunehmenden Fernprogrammierung können die in Frage kommenden Leistungsmerkmale und Dienste eingerichtet bzw. geändert werden. Zum Beispiel werden dann für eine zentrale Kurzwahl die Rufnummern mit der Belegungskennzahl, die die Leitung bzw. die Richtung bestimmt, eingegeben. Es können dann zu den Kurzwahlzielen die entsprechenden Namen zugeordnet werden. Als weiteres Beispiel sei die Einrichtung eines Endgerätes genannt. Neben dem Endgerätetyp, beispielsweise Standardendgerät, Phone, Mail, Lautsprecher, Anrufbeantworter oder Fax ist der jeweilige Name vorzugeben. Außerdem kann festgelegt werden, ob bestimmte Leistungsmerkmale, wie zum Beispiel Aufschalten, assoziierte Wahl, Anklopfschutz, Fangen usw. erlaubt oder nicht erlaubt sind. Es kann die Art einer Anrufübernahmegruppe und die Art einer Leitungsbelegung für ein-Endgerät per Fernprogrammierung festgelegt werden. Diese Beispiele sind nur als ein Auszug aus den in einer Menü-Tabelle enthaltenen Möglichkeiten genannt.

Es sind im Zusammenhang mit der Fernverwaltung bzw. Fernprogrammierung auch noch verschiedene Varianten bzw. Erweiterungen möglich. Es könnte beispielsweise die Eröffnung der Freigabeprozedur durch den Teilnehmer des Zielkommunikationssystems vermittels einer Mehrfrequenzcode-Zeichenfolge durch eine entsprechende Darstellung am Fernsprechendgerät im Ursprungskommunikationssystems KS-A, von dem aus die Programmierung erfolgt, quittiert werden. Außerdem könnte für die Dauer der Fernprogrammierung dem beteiligten Fernsprechendgerät im Zielkommunikationssystem ein spezieller Hörton zugeleitet bzw. eine spezielle Displayanzeige vorgenommen werden. Das Ende der Fernprogrammierung könnte auch bei diesem Teilnehmer durch einen speziellen Aufmerksamkeitsruf signalisiert werden.

Eine andere Möglichkeit besteht darin, daß Rufe auf speziellen Leitungen automatisch durch das Zielkommunikationssystem entgegengenommen werden und dies die automatische Anschaltung der Code-Empfänger veranlaßt. In einem solchen Fall muß kein Endgerät des Zielkommunikationssystems gerufen werden, um eine Fernprogrammierung in diesem System durchzuführen. Die Fernprogrammierung wird dann automatisch eröffnet, wenn die vermittels der Mehrfrequenzcode-Zeichen übermittelte Einstiegssignalisierung vom Zielkommunikationssystem empfangen wurde. Der damit erreichte passive Fernbetriebsmodus dieses Systems kann parallel dazu zum Beispiel durch eine DisplayAnzeige an einen speziellen Systemfernsprecher signalisiert werden.

Bei automatischem Start der Fernprogrammierung ohne Freigabeprozedur ist zum Schutz der Daten des Zielkommunikationssystems ein Sicherheitsalgorithmus vorzusehen. Dieser kann z.B. darin bestehen, daß vor Beginn der Prozedur ein vereinbarter Zugangscode vom Ursprungs- zum Zielkommunikationssystem übertragen wird.

Das in der Figur gezeigte Prinzip-Schaltbild betrifft im wesentlichen die Verarbeitung während des bestehenden Fernprogrammierungs-Modus, die allen genannten Varianten gemeinsam ist. Die Erweiterung bzw. die besonderen Ausprägungen der Funktionalität, insbesondere im Zielkommunikationssystem werden durch den Informationsaustausch zwischen der Bedienungsoberfläche, repräsentiert durch das Programmodul BOF und den die Mehrfrequenzcode-Zeichen bildenden bzw. decodierenden Programmbausteinen ENC bzw. DEC, und der peripherienahen Komponente DH-Ltg realisiert.

## Patentansprüche

1. Verfahren zur Anderung von in einem speicherprogrammierten privaten Kommunikationssystem abgespeicherten betriebstechnischen Daten, die bedieneroberflächengesteuert eingebbar sind, wobei das Kommunikationssystem einen Systemspeicher zur Speicherung von Programmodulen und von Daten und wenigstens einen Systemprozessor mit einem Betriebssystem zur Bearbeitung der Programmodule aufweist und die Änderung der betriebstechnischen Daten vermittels der Eingaben an einem an das System angeschlossenen und mit einem Display versehenen Fernsprechendgerät vorgenommen wird,
**dadurch gekennzeichnet,**
**daß** durch die Eingabe einer bestimmten Prozedur das Kommunikationssystem (KS-A) in einen Sonderbetriebsmodus zu schalten ist, daß in diesem Modus über eine vorab aufgebaute Verbindung zwischen diesem Ursprungskommunikationssystem und einem anderen im wesentlichen gleichartig strukturierten privaten Zielkommunikationssystem (KS-B) unter Einbeziehung einer die Übermittlung einer bestimmten Art von Informationen ermöglichenden Schnittstelle (LS; ENC, DEC) jeweils unmittelbar solche vollständigen Auftragsdateninformationen zugeführt werden, wie sie in gleicher Weise auch im Zusammenhang mit der Änderung der betriebstechnischen Daten des Ursprungskommunikationssystems (KS-A) zur Übergabe von einem die Bedienungsoberfläche repräsentierenden Programmodul (BOF) an das die Abläufe für die Einspeicherung der geänderten relevanten Speicherinhaltsdaten bestimmendes Programmodul (DBH) generierbar sind und daßanstelle einer Zuführung dieser Auftragsinformationen an das Programmodul (DBH) des Ursprungskommunikationssystems (KS-A) diese Auftragsdateninformationen umgewandelt in eine entsprechende Protokollform dem entsprechenden Programmodul (DBH-B) des Zielkommunikationssystems (KS-B) zugeführt werden, das für die Durchführung der peripher-orientierten Abläufe zuständig ist und daß aufgrund eines bestimmten Endekriteriums in die normale Betriebsart des Ursprungskommunikationssystems gewechselt wird.

2. Verfahren nach Anspruch 1,
**dadurch gekennzeichnet,**
**daß** die Schnittstelle die jeweilige Auftragsdateninformation zur Aussendung an das Zielkommunikationssystems bei Zugrundelegung einer analogen weiterführenden Leitung (AL) in Mehrfrequenzcode-Zeichen (ENC) umsetzt.

3. Verfahren nach Anspruch 2,
daß die eine analoge Leitung bedienende Schnittstelle, die als Mehrfrequenzcode-Zeichen übertragenen Auftragsinformationen empfangsseitig in die Ursprungsauftragsinformation umwandelt, daß diese umgewandelten Auftragsinformationen unmittelbar dem peripher-orientierten Programmodul (DBH-B) zum gezielten Zugriff auf die in einem bestimmten Speicherbereich (Kundendatenspeicher KD-B) enthaltenen Daten zugeführt werden und daß zur Bestätigung von Aufträgen und/oder zur Übermittlung von in den Aufträgen angeforderten Daten Mehrfrequenzcode-Zeichen gebildet und zum Ursprungskommunikationssystem (KS-A) rückübertragen und dort daraus Display-Meldungen zur Darstellung auf dem Display des beteiligten Fernsprechendgerätes abgeleitet werden.

4. Verfahren nach Anspruch 1 oder 2,
**dadurch gekennzeichnet,**
**daß** die Schnittstelle eine ISDN-orientierte Leitungsschnittstelle darstellt und daß die jeweils vollständigen Auftragsdateninformationen der einzelnen Änderungsschritte als B-bzw. als D-Kanalprotokoll übermittelt werden.

5. Verfahren nach den Ansprüchen 1 bis 4,
**dadurch gekennzeichnet,**
**daß** als Auftragsdateninformation gezielte endgerätebezogene Lese- bzw. Schreibaufträge oder Aufträge zur Darstellung von z.B. endgerätebezogenen aufeinanderfolgenden Speicherinhalten im Sinne von "Weiterblättern" generierbar sind und daß entsprechende Quittungsinformationen zum Ursprungskommunikationssystem (KS-A) rückübersandt werden, aus denen jeweils Display-Meldungen zur Darstellung am Display des aktuell beteiligten Endgerätes FE1 generiert werden.

6. Verfahren nach einem der vorhergehenden Ansprüche,
**dadurch gekennzeichnet,**
**daß** zur Bildung der Auftragsdateninformation die hierzu notwendigen Entscheidungsinformationen, von dem die Bedienungsoberfläche repräsentierenden Programmodul (BOF) des Ursprungskommunikationssystems (KS-A) erzeugt werden und daß im Hinblick auf dieses Programmodul die Bedienungsoberfläche des Ursprungskommunikationssystems (KS-A) mit in diesem System gebildeten Display-Texten unterstützt wird, daß dies durch Prozedursteuer-Informationen oder durch von Zielkommunikationssystemen (KS-B) empfangenen Quittungsinformationen erfolgt.

7. Verfahren nach einem der vorhergehenden Ansprüche,
**dadurch gekennzeichnet,**
**daß** nach dem Aufbau einer Verbindung zwischen dem Ursprungskommunikationssystem (KS-A) und dem Zielkommunikationssystem (KS-B) im Zuge dieser Verbindung von einem berechtigten Teilnehmerendgerät (FEx) des Zielsystems eine Bestätigungsinformation eingegeben wird, so daß durch die entsprechenden bedieneroberflächengesteuerten Eingaben im Ursprungskommunikationssystem auf Grund der übermittelten Auftragsinformationen eine gezielte Verwaltung bzw. Änderung der im Zielkommunikationssystem abgespeicherten Daten, insbesondere der abgespeicherten Kundendaten, vornehmbar ist.

8. Verfahren nach den Ansprüchen 4 und 7,
**dadurch gekennzeichnet,**
**daß** durch die Eingabe der Bestätigungsinformation im Zielkommunikationssystem (KS-B) an die aktuelle Verbindungsleitung eine die Mehrfrequenzcode-Zeichen verarbeitende bzw. erzeugende Einheit (ENC bzw. DEC) für den wechselseitigen Informationsaustausch angeschaltet wird.

9. Verfahren nach Anspruch 7,
**dadurch gekennzeichnet,**
**daß** nach der Eingabe der Bestätigungsinformation das betreffende Endgerät (FEx) auslösbar ist, und daß die Leitungsverbindung zwischen den beiden Kommunikationssystemen jedoch weiter aufrechterhalten wird.

10. Verfahren nach einem der vorhergehenden Ansprüche,
**dadurch gekennzeichnet,**
**daß** der bestehende passive Fernbetriebsmodus des Zielkommunikationssystems (KS-B) durch den Empfang eines Auslösekriteriums auf der betreffenden Verbindungsleitung oder durch den Empfang eines speziellen vom Ursprungskommunikationssystem generierten Endekriteriums beendet wird.

11. Verfahren nach Anspruch 10,
**dadurch gekennzeichnet,**
**daß** bei Ausbleiben einer durch das Ursprungskommunikationssystem generierten zyklischen Signalisierung das Beenden des passiven Fernbetriebsmodus für das Zielkommunikationssystem (KS-B) nach Ablauf einer bestimmten Zeitdauer automatisch erfolgt oder nach dem Erkennen eines Hörzeichens auf der jeweiligen Verbindungsleitung vorgenommen wird.

12. Verfahren nach Anspruch 3,
**dadurch gekennzeichnet,**
**daß** für die Verbindung zwischen dem Ursprungskommunikationssystem und dem Zielkommunikationssystem spezielle Leitungen heranziehbar sind, an die im Zielkommunikationssystem (KS-B) Mehrfrequenzcode-Empfänger angeschaltet sind, auf denen Anrufe automatisch entgegengenommen werden, so daß die entsprechend übermittelte Einstiegsinformation für die beabsichtigte Verwaltung und/oder Änderung von betriebstechnischen Daten unmittelbar automatisch registrierbar ist und daß dies die Eröffnung des passiven Fernbetriebsmodus im Zielkommunikatonssystem bewirkt.

13. Verfahren nach einem der vorhergehenden Ansprüche,
**dadurch gekennzeichnet,**
**daß** für die Dauer des Fernbetriebsmodus dem beteiligten Endgerät des Zielkommunikationssystem ein entsprechendes akustisches oder visuell erfaßbares Aufmerksamkeitszeichen erzeugt wird.

14. Verfahren nach einem der vorhergehenden Ansprüche,
**dadurch gekennzeichnet,**
**daß** das Ende des Fernbetriebsmodus den im Zielkommunikationssystem (KS-B) beteiligten Endgerät (FEx) durch ein akustisches Aufmerksamkeitszeichen oder durch eine visuell erfaßbare Information zur Kenntnis gebracht wird.

## Claims

1. Method of amending operational data which is stored in a stored-program private communications system and can be input under the control of the user interface, the communications system having a system memory for storing program modules and data and at least one system processor with an operating system for processing the program modules, and the amendment of the operational data being performed by means of the inputs at a telephone terminal connected to the system and provided with a display, **characterized in that**, by the input of a specific procedure, the communications system (KS-A) can be switched into a special operating mode, **in that** in this mode, via a previously set-up connection between this source communications system and another, essentially identically structured private target communications system (KS-B), with the inclusion of an interface (LS; ENC, DEC) making possible the transmission of a specific type of information, there is in each case directly supplied such complete job data information as can be generated in the same way also in connection with the amendment of the operational data of the source communications system (KS-A) for transfer from a program module (BOF) representing the user interface to the program module (DBH) determining the sequences for the storing of the amended relevant memory content data and **in that**, instead of supplying this job information to the program module (DBH) of the source communications system (KS-A), this job data information, converted into a corresponding protocol form, is supplied to the corresponding program module (DBH-B) of the target communications system (KS-B) which is responsible for carrying out the peripheral-oriented sequences and **in that**, on the basis of a specific end criterion, a change-over is made into the normal operating mode of the source communications system.

2. Method according to Claim 1, **characterized in that** the interface converts the respective job data information into multifrequency code signals (ENC) for transmission to the target communications system, using as a basis an analogue, continuing line (AL).

3. Method according to Claim 2, **characterized in that** the interface serving an analogue line converts the job information, transferred as multifrequency code signals, on the reception side into the source job information, **in that** this converted job information is supplied directly to the peripheral-oriented program module (DBH-B) for selective access to the data contained in a specific memory area (customer data memory KD-B) and **in that**, for the confirmation of jobs and/or for the transmission of data requested in the jobs, multifrequency code signals are formed and transmitted back to the source communications system (KS-A), where they are used to derive display messages for presenting on the display of the telephone terminal involved.

4. Method according to Claim 1 or 2, **characterized in that** the interface represents an ISDN-oriented line interface and **in that** the respectively complete job data information of the individual amendment steps is transmitted as B channel protocol and D channel protocol.

5. Method according to Claims 1 to 4, **characterized in that** selective terminal-related reading or writing jobs, or jobs for presenting, for example, terminal-related successive memory contents in the sense of "browsing" can be generated as job data information and **in that** corresponding acknowledgement information is transmitted back to the source communications system (KS-A) and is used in each case to generate display messages for presenting on the display of the terminal FE1 currently involved.

6. Method according to one of the preceding claims, **characterized in that**, for forming the job data information, the decision information necessary for this is generated by the program module (BOF) of the source communications system (KS-A) representing the user interface and **in that**, with regard to this program module, the user interface of the source communications system (KS-A) is supported with display texts formed in this system and **in that** this takes place by procedure control information or by acknowledgement information received from target communications systems (KS-B) .

7. Method according to one of the preceding claims, **characterized in that**, after setting up a connection between the source communications system (KS-A) and the target communications system (KS-B), in the course of this connection, confirmation information is input from an authorized subscriber terminal (FEx) of the target system, so that a selective management or amendment of the data stored in the target communications system, in particular of the stored customer data, can be performed by the corresponding user-interface-controlled inputs in the source communications system, on the basis of the job information transmitted.

8. Method according to Claims 4 and 7, **characterized in that**, by the input of the confirmation information in the target communications system (KS-B), a unit (ENC and DEC) respectively processing and generating the multifrequency code signals for the reciprocal exchange of information is connected to the current connection line.

9. Method according to Claim 7, **characterized in that**, after the input of the confirmation information, the terminal (FEx) concerned can be cleared, and **in that** the line connection between the two communications systems is nevertheless still maintained.

10. Method according to one of the preceding claims, **characterized in that** the existing passive remote operating mode of the target communications system (KS-B) is ended by the reception of a clearing criterion on the connection line concerned or by the reception of a special end criterion generated by the source communications system.

11. Method according to Claim 10, **characterized in that**, if a cyclical signalling generated by the source communications system does not take place, the ending of the passive remote operating mode for the target communications system (KS-B) takes place automatically after the elapse of a specific period of time or is performed after the detection of an audible signal on the respective connection line.

12. Method according to Claim 3, **characterized in that** special lines to which there are connected in the target communications system (KS-B) multifrequency code receivers on which calls are automatically answered can be used for the connection between the source communications system and the target communications system, so that the correspondingly transmitted entry information for the intended management and/or amendment of operational data can be automatically registered directly and **in that** this effects the opening of the passive remote operating mode in the target communications system.

13. Method according to one of the preceding claims, **characterized in that**, for the duration of the remote operating mode, a corresponding acoustic or visually perceptible attention signal is generated on the terminal involved of the target communications system.

14. Method according to one of the preceding claims, **characterized in that** the end of the remote operating mode is indicated to the terminal (FEx) involved, in the target communications system (KS-B), by an acoustic attention signal or by visually perceptible information.

## Revendications

1. Procédé de modification de données techniques d'exploitation qui sont mémorisées dans un système de communication privé à programme enregistré et qui peuvent être entrées suivant la commande d'une interface d'utilisateur, le système de communication comportant une mémoire de système pour la mémorisation de modules de programme et de données et au moins un processeur de système avec un système d'exploitation pour le traitement des modules de programme et la modification des données techniques d'exploitation étant effectuée au moyen des entrées effectuées sur un terminal téléphonique raccordé au système et muni d'un écran,
**caractérisé par le fait que**, par l'entrée d'une certaine procédure, le système de communication (KS-A) est à commuter dans un mode d'exploitation spécial ; dans ce mode, par l'intermédiaire d'une liaison préalablement établie entre ce système de communication d'origine et un autre système de communication de destination privé (KS-B) structuré sensiblement de la même manière et en incluant une interface (LS ; ENC, DEC) permettant la transmission d'un certain type d'informations, on envoie à chaque fois directement des informations de données de tâches complètes telles celles qui peuvent aussi être produites de la même manière en relation avec la modification des données techniques d'exploitation du système de communication d'origine (KS-A) en vue du transfert d'un module de programme (BOF) représentant l'interface de commande au module de programme (DBH) déterminant les opérations pour la mémorisation des données de contenu de mémoire pertinentes modifiées ; à la place d'un envoi de ces informations de tâches au module de programme (DBH) du système de communication d'origine (KS-A), on envoie ces informations de données de tâches, converties dans une forme de protocole appropriée, au module de programme correspondant (DBH-B) qui se trouve dans le système de communication de destination (KS-B) et qui est compétent pour la mise en oeuvre des opérations orientées périphérie ; et, sur la base d'un certain critère de fin, on commute dans le mode d'exploitation normal du système de communication d'origine.

2. Procédé selon la revendication 1,
**caractérisé par le fait que**, pour l'émission basée sur une ligne de retransmission analogique (AL) vers le système de communication de destination, l'interface convertit l'information de données de tâches respective en signaux de code multifréquence (ENC).

3. Procédé selon la revendication 2,
**caractérisé par le fait que** du côté récepteur, l'interface exploitant une ligne analogique convertit les informations de tâches transmises comme signaux de code multifréquence en informations de tâches d'origine ; on envoie ces informations de tâches converties directement au module de programme orienté périphérie (DBH-B) en vue de l'accès ciblé aux données contenues dans une certaine zone de mémoire (mémoire de données de clients KD-B); et, pour la confirmation de tâches et/ou pour la transmission de données demandées dans les tâches, on forme des signaux de code multifréquence, on les transmet en retour au système de communication d'origine (KS-A) et on en déduit là des messages d'écran en vue d'une présentation sur l'écran du terminal téléphonique concerné.

4. Procédé selon la revendication 1 ou 2,
**caractérisé par le fait que** l'interface représente une interface de ligne orientée RNIS et que les informations de données de tâches respectivement complètes des différentes étapes de modification sont transmises comme protocole de canal B ou comme protocole de canal D.

5. Procédé selon les revendications 1 à 4,
**caractérisé par le fait que** comme information de données de tâches, on peut produire des tâches de lecture ou d'écriture ciblées se rapportant au terminal ou des tâches pour la représentation par exemple de contenus de mémoire successifs se rapportant au terminal en vue d'un "défilement" ; et on envoie en retour au système de communication d'origine (KS-A) des informations d'accusé de réception correspondantes à partir desquelles on produit à chaque fois des messages d'écran pour une présentation sur l'écran du terminal actuellement concerné FE1.

6. Procédé selon l'une des revendications précédentes,
**caractérisé par le fait que** pour la formation de l'information de données de tâches, on produit les informations de décision nécessaires à cet effet au moyen du module de programme (BOF), représentant l'interface de commande, du système de communication d'origine (KS-A) ; et, pour ce qui est de ce module de programme, on assiste l'interface de commande du système de communication d'origine (KS-A) avec des textes d'écran formés dans ce système, ceci s'effectuant au moyen d'informations de commande de procédure ou d'informations d'accusé de réception reçues par des systèmes de communication de destination (KS-B).

7. Procédé selon l'une des revendications précédentes,
**caractérisé par le fait qu'**après l'établissement d'une liaison entre le système de communication d'origine (KS-A) et le système de communication de destination (KS-B), on entre au cours de cette liaison une information de confirmation au moyen d'un terminal d'abonné autorisé (FEx) du système de destination de telle sorte que, par les entrées correspondantes commandées par l'interface d'utilisateur dans le système de communication d'origine et sur la base des informations de tâches transmises, on peut effectuer une gestion ou modification ciblée des données mémorisées dans le système de communication de destination, notamment des données de clients mémorisées.

8. Procédé selon les revendications 4 et 7,
**caractérisé par le fait que** par l'entrée de l'information de confirmation dans le système de communication de destination (KS-B), on connecte sur la ligne de liaison actuelle une unité (ENC ou DEC) qui traite ou produit les signaux de code multifréquence en vue de l'échange réciproque d'informations.

9. Procédé selon la revendication 7,
**caractérisé par le fait que**, après l'entrée de l'information de confirmation, le terminal concerné (FEx) peut être raccroché mais la liaison de ligne entre les deux systèmes de communication est maintenue.

10. Procédé selon l'une des revendications précédentes,
**caractérisé par le fait qu'**il est mis fin au mode d'exploitation à distance passif existant du système de communication de destination (KS-B) par la réception d'un critère de libération sur la ligne de liaison concernée ou par la réception d'un critère de fin spécial produit par le système de communication d'origine.

11. Procédé selon la revendication 10,
**caractérisé par le fait que**, en l'absence d'une signalisation cyclique produite par le système de communication d'origine, il est mis fin automatiquement au mode d'exploitation à distance passif pour le système de communication de destination (KS-B) après l'expiration d'un certain délai ou après la détection d'un signal de tonalité sur la ligne de liaison respective.

12. Procédé selon la revendication 3,
**caractérisé par le fait que**, pour la liaison entre le système de communication d'origine et le système de communication de destination, on peut exploiter des lignes spéciales sur lesquelles sont connectés dans le système de communication de destination (KS-B) des récepteurs de code multifréquence sur lesquels des appels sont automatiquement reçus de telle sorte que l'information d'entrée en communication transmise de manière appropriée pour la gestion et/ou modification envisagée de données techniques d'exploitation peut être enregistrée directement et automatiquement et que ceci provoque le déclenchement du mode d'exploitation à distance passif dans le système de communication de destination.

13. Procédé selon l'une des revendications précédentes,
**caractérisé par le fait que**, pour la durée du mode d'exploitation à distance, on produit dans le terminal concerné du système de communication de destination un signal d'attention correspondant sonore ou perceptible visuellement.

14. Procédé selon l'une des revendications précédentes,
**caractérisé par le fait qu'**on signale la fin du mode d'exploitation à distance au terminal (FEx) concerné dans le système de communication de destination (KS-B) au moyen d'un signal d'attention sonore ou d'une information perceptible visuellement.
